# EUROPÄISCHE PATENTSCHRIFT

(11) **EP 2 655 006 B1**
(45) Veröffentlichungstag und Bekanntmachung des Hinweises auf die Patenterteilung: **07.01.2015**
(21) Anmeldenummer: 11804669.7
(22) Anmeldetag: 19.12.2011
(51) Int. Cl.: B23Q 1/34, B06B 1/06, B24B 1/04, B23P 25/00

(54) **VORRICHTUNG MIT ZWEI SCHWINGUNGSKOMPONENTEN ZUM SPANENDEN BEARBEITEN EINES WERKSTÜCKS UND VERFAHREN DAFÜR**
SYSTEM AND METHOD HAVING TWO OSCILLATION COMPONENTS FOR MACHINING A WORKPIECE AND METHOD THEREFOR
DISPOSITIF À DEUX COMPOSANTES D'OSCILLATION POUR L'USINAGE PAR ENLÈVEMENT DE COPEAUX D'UNE PIÈCE ET PROCEDE POUR CELUI-CI

(30) Priorität: 21.12.2010 DE 102010055288
(43) Veröffentlichungstag der Anmeldung: 30.10.2013
(73) Patentinhaber: EV Group GmbH, 4782 St. Florian am Inn (AT)
(72) Erfinder: TIEFENBÖCK, Herbert, A-4770 Andorf Schärding (AT)
(74) Vertreter: Schweiger, Johannes
(86) Internationale Anmeldenummer: PCT/EP2011/073185
(87) Internationale Veröffentlichungsnummer: WO 2012/084779

(56) Entgegenhaltungen:
- EP-A1- 0 323 518
- EP-A2- 1 762 305

## Beschreibung

Die vorliegende Erfindung betrifft eine Vorrichtung zum spanenden Bearbeiten eines Werkstücks gemäß Patentanspruch 1 sowie ein **Verfahren** gemäß Patentanspruch 8.

Bekannte Vorrichtungen wie die EP 0323518 A1 oder die EP 1762305 A2 zum Spanen, insbesondere Fräsen, von Werkstücken sind in der Lage, während des Bearbeitungsprozesses mit Schwingungen des Werkzeuges verbesserte Fräseigenschaften während des Werkzeugumlaufs zu erzeugen, wobei Frequenzen von 18.000 Hz bis 20.000 Hz angewendet werden.

Bei solchen Vorrichtungen bereiten insbesondere extrem harte Werkstücke wie beispielsweise SiC, SiN oder B₄N Probleme, da diese zu einem extremen Verschleiß der Werkzeuge führen.

Es ist daher die Aufgabe der vorliegenden Erfindung, eine gattungsgemäße Vorrichtung derart zu verbessern, dass ein geringerer Werkzeugverschleiß und entsprechend höhere Standzeiten sowie eine Steigerung der Verarbeitungsgeschwindigkeit, also des Spanvolumens beziehungsweise Aushubvolumens pro Zeiteinheit erreicht werden kann.

Diese Aufgabe wird mit den Merkmalen der Patentansprüche 1 und 8 gelöst. Vorteilhafte Weiterbildungen der Erfindung sind in den Unteransprüchen angegeben.

Grundgedanke der vorliegenden Erfindung ist es, durch prozessgesteuerte mehrdimensional gekoppelte und synchronisierte Achserregung eine verbesserte Spanwirkung zu erzielen. Damit eignet sich die Erfindung besonders für harte und ultraharte Werkstoffe, wie beispielsweise Oxidkeramiken, Nichtoxidkeramiken, Hartmetalle oder Glas. Erfindungsgemäß erfolgt beim Eingriff des Werkzeugs in das Werkstück, also beim Spanen, eine mehrachsige, schwingende Relativbewegung zwischen der Werkstückaufnahmeeinrichtung und damit dem Werkstück und dem Werkzeug. Dabei wird die Mikrostruktur des Werkstückes derart belastet, dass eine bessere Spanwirkung erreicht wird.

Auf Grund der ebenfalls meist mehrachsigen Bearbeitungsmöglichkeiten des Werkzeugs durch, mehrachsige, gekoppelte und synchronisierte Relativbewegung zwischen dem Werkzeug und dem Werkstück sind die X-, Y- und Z-Richtung auf die jeweilige Bearbeitungsfläche bezogen. Diese ist nicht zwingend in der in den Figuren gezeigten normalen Ausrichtung, sondern im Idealfall beliebig, um eine individuelle Bearbeitung des Werkstücks zuzulassen. Somit ist eine Bearbeitungsebene in X- und Y-Richtung und eine Bearbeitungsrichtung oder auch Vorschubrichtung des Werkzeugs und/oder des Werkstücks, also eine Bewegung des Werkzeugs und/oder des Werkstücks auf einander zu, vorgesehen.

Durch die Erfindung wird demnach, insbesondere wegen der in Z-Richtung, also Vorschubrichtung, vorgesehenen ersten Schwingungskomponente, ein Mikro-Meißeleffekt oder Mikro-Schlagbohreffekt erzeugt, wobei zusätzlich eine Querkomponente durch die zweite Schwingungskomponente eingebracht wird.

Die Meißelwirkung des Werkzeugs wird durch die Schwingungselemente bewirkt, wobei die überwiegende Schwingungskomponente bzw. -amplitude vorzugsweise in Z-Richtung, also in Vorschubrichtung vorgesehen ist.

Die Einbringung der Schwingungskomponenten erfolgt durch, insbesondere achsbezogene, Schwingungsdämpfung (passiv) und/oder durch, insbesondere achsbezogene, Schwingungserregung (aktiv). Einbringungsmittel sind erfindungsgemäß insbesondere an dem Werkzeug vorgesehen.

Eine passive Steuerung der Einbringung der jeweiligen Schwingungskomponente erfolgt erfindungsgemäß dadurch, dass eine durch die spanende Bearbeitung des Werkstücks vom Werkzeug erregte Schwingung so reduziert, moduliert oder gedämpft wird, dass eine vorgegebene Schwingungskomponente mit einer definierten Amplitude, Frequenz und/oder Phase bewirkt wird.

Eine aktive Steuerung der Einbringung der jeweiligen Schwingungskomponente erfolgt durch eine zusätzliche, insbesondere fremderregte, Schwingung, die sich mit einer etwaig vorhandenen, durch die spanende Bearbeitung vom Werkzeug selbst erregten Schwingung überlagert.

Die aktive Steuerung kann erfindungsgemäß, insbesondere bei programmierbaren, mehrachsig schwingenden Werkzeugen durch entsprechende Programmierung der Steuerung erfolgen, indem definierte Schwingungskomponenten mit definierten Amplituden, Frequenzen und/oder Phasen durch die programmierten Bewegungen beim spanenden Bearbeiten erzeugt werden.

Bevorzugt sind Schwingungsfrequenzen der jeweiligen (gedämpften und/oder fremderregten) Schwingungskomponente kleiner 1 kHz, insbesondere kleiner 500 Hz, vorzugsweise größer 10 Hz.

Gemäß einer vorteilhaften Ausführungsform der Erfindung ist vorgesehen, dass Schwingungsamplituden und/oder Schwingungsfrequenzen der ersten und/oder zweiten Schwingungskomponenten, insbesondere unabhängig voneinander, einstellbar sind. Auf diese Weise ist die Vorrichtung auf das jeweilige, zu bearbeitende Material des Werkstückes beziehungsweise die Kombination der Materialien des Werkzeuges und des Werkstückes einstellbar.

Soweit die Schwingungsfrequenzen kleiner als 1 GHz, insbesondere < 100 MHz, vorzugsweise < 1 MHz, noch bevorzugter < 100 kHz, noch bevorzugter < 1 kHz, idealerweise zwischen 100 Hz und 600 Hz einstellbar sind, wird eine immer bessere Spanwirkung erzielt.

Indem gleichzeitig oder unabhängig davon die Schwingungsamplituden < 100 µm, insbesondere < 10 µm, vorzugsweise < 1 µm, noch bevorzugter < 100 nm und idealerweise zwischen 1 nm und 10 nm einstellbar sind, wird die Spanwirkung der Vorrichtung weiter erhöht. Besonders vorteilhaft ist es, wenn gemäß einer Ausführungsform der Erfindung die Schwingungskomponenten durch Piezoelemente erzeugt werden.

Mit Vorzug ist die Schwingungsamplitude in X- und/oder Y-Richtung maximal so groß wie die durchschnittlichen Abmessungen von Mikrostrukturen, insbesondere Diamanten, in der Oberfläche des Werkzeugs. Weitere Vorteile, Merkmale und Einzelheiten der Erfindung ergeben sich aus der Beschreibung bevorzugter Ausführungsbeispiele sowie anhand der Zeichnungen. Diese zeigen in:
- Figur 1: eine Ausführungsform einer nicht beanspruchten Vorrichtung in einer schematischen, perspektivischen Ansicht,
- Figur 2: eine erste Ausführungsform der erfindungsgemäßen Vorrichtung in einer schematischen, perspektivischen Ansicht,
- Figur 3: eine zweite Ausführungsform der erfindungsgemäßen Vorrichtung in einer schematischen, perspektivischen Ansicht und
- Figur 4a bis 4c: eine Darstellung der Funktionsweise der Schwingungselemente.

In den Figuren sind gleiche oder gleichwirkende Bestandteile/Merkmale mit den gleichen Bezugszeichen gekennzeichnet.

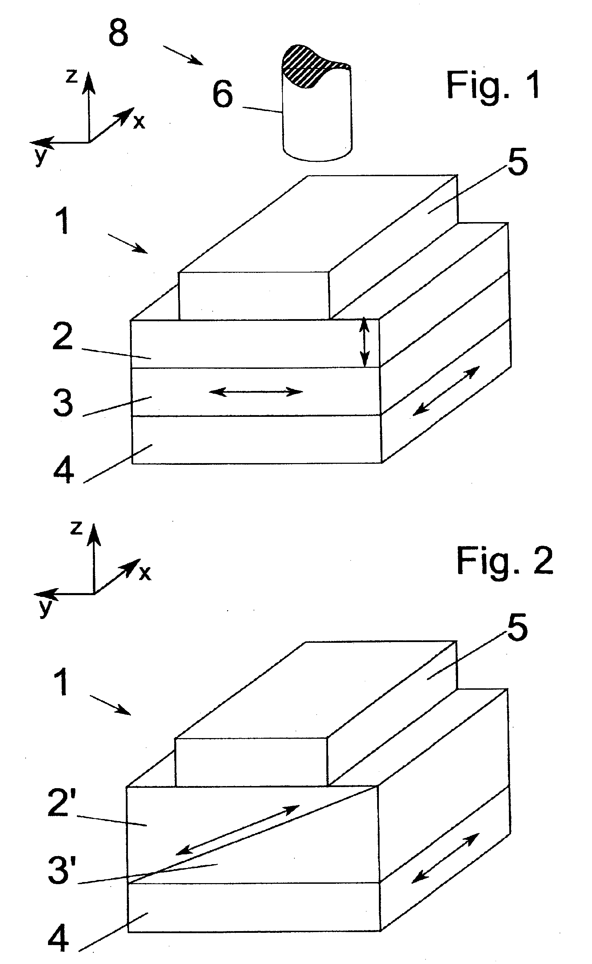

Die Vorrichtung gemäß Figur 1 ist eine Werkzeugmaschine mit einer Werkstückhalterung 1 zur Halterung und Bewegung eines Werkstücks 5 gegenüber einem Werkzeug 6 zum spanenden Bearbeiten des Werkstücks 5.

In der nicht beanspruchten Ausführungsform gemäß Figur 1 besteht die Werkstückhalterung 1 aus einem ersten Schwingungselement 2 zur Ausführung einer Schwingungsbewegung in Z-Richtung. Die Z-Richtung entspricht einer Bewegung in Richtung des Werkzeuges 6 beziehungsweise von diesem weg. Das Schwingungselement 2 besitzt insbesondere einen einzigen Freiheitsgrad in Z-Richtung, führt demnach eine Hin-und-Her-Bewegung, insbesondere Linearbewegung, in Z-Richtung aus.

Zwei weitere, mit dem Schwingungselement 2 verbundene Schwingungselemente 3, 4 bewegen beziehungsweise schwingen das Werkstück 5 in einer X-Richtung beziehungsweise einer Y-Richtung, wobei die X-, die Y- und die Z-Richtung jeweils zueinander senkrecht verlaufen. Auch die Schwingungselemente 3, 4 besitzen einen einzigen Freiheitsgrad.

Die Bewegung der Schwingungselemente 2, 3, 4 erfolgt in Form von Schwingungen mit einer jeweiligen Schwingungsamplitude und einer jeweiligen Schwingungsfrequenz, die für jedes Schwingungselement 2, 3, 4, insbesondere unabhängig voneinander, einstellbar sind. Auf diese Weise kann eine mehrachsige Schwingungsanregung des an der Werkzeughalterung 1 befestigten Werkstücks 5 erzeugt werden, wobei erfindungsgemäß zumindest eine erste Schwingungskomponente in Z-Richtung durch das Schwingungselement 2 und eine zweite Schwingungskomponente in X-Richtung durch die Antriebskomponente 4 und/oder in Y-Richtung durch die Antriebskomponente 3 vorgesehen ist, so dass die Schwingungen der ersten und zweiten Schwingungskomponente während des gesamten Bearbeitungsprozesses eine zueinander konstante Phasenbeziehung besitzen.

Die Schwingungselemente 2, 3, 4 umfassen insbesondere zur Schwingungsanregung Piezoelemente 8, 9. Die Schwingungsanregung kann alternativ durch Spindeln mit Exenterwellen erzeugt werden, je nach der geforderten Schwingungsfrequenz und/oder Schwingungsamplitude.

Besonders vorteilhaft ist es, wenn die Schwingungskomponenten simultan, insbesondere hinsichtlich deren Schwingungsphasen und/oder deren Schwingungsfrequenz und/oder deren Schwingungsamplituden einstellbar sind. Mit anderen Worten: Die Schwingungsphasen und/oder deren Schwingungsfrequenz und/oder deren Schwingungsamplituden sind synchron arbeitend ausgebildet.

Unabhängig von den Schwingungselementen 2, 3, 4 sind je nach der vorgesehenen Werkzeugmaschine beziehungsweise je nach der gewünschten spanenden Bearbeitung hier nicht dargestellte Antriebsmittel für die Bewegung des Werkstücks unabhängig von den Schwingungskomponenten vorgesehen.

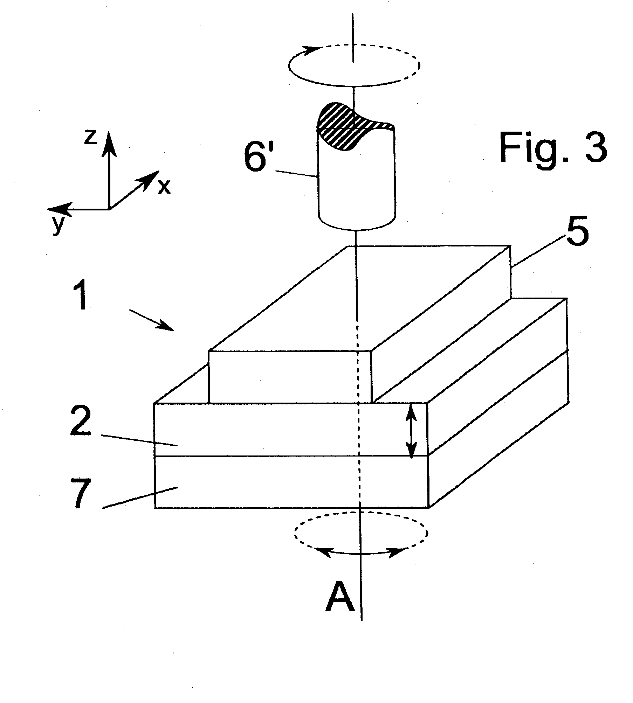

In der in Figur 2 gezeigten Ausführungsform der Erfindung sind die Schwingungselemente 2', 3' so gegeneinander geführt, dass bei einer Relativbewegung der Schwingungselemente 2' und 3' zueinander eine schräge Schwingungskomponente erzeugt wird, die gleichzeitig je mindestens eine Schwingungskomponente in X- und Y-Richtung oder in X- und Z-Richtung oder in Y- und Z-Richtung, wie bei dem in Figur 3 dargestellten Beispiel, bewirkt. Es findet also durch die Schrägstellung gegenüber der Bearbeitungsrichtung oder auch Vorschubrichtung des Werkzeugs und/oder des Werkstücks eine Vereinigung zweier Schwingungskomponenten statt, so dass eine schräge Schwingungskomponente mit einer schrägen Schwingungsebene vorgesehen ist. Schräge Schwingungsebene bedeutet also, dass die Normale der Schwingungsebene zur Z-Richtung (Bearbeitungsrichtung oder auch Vorschubrichtung des Werkzeugs und/oder des Werkstücks) geneigt ist.

Auf diese Weise sind die beiden Schwingungskomponenten in Y- und Z-Richtung automatisch, durch ein mechanisch vorgegebenes Konstruktionselement, nämlich der schiefen Ebene, simultan oder synchron, und zwar sowohl hinsichtlich der Schwingungsamplituden als auch der Schwingungsfrequenzen und insbesondere der Schwingungsphasen. Daher müssen im Gegensatz zur ersten genannten Ausführungsform keine separaten Mittel vorgesehen sein, um die Phasenbeziehungen zwischen zwei separaten Schwingungen zweier Schwingungskomponenten konstant zu halten, da die zwei Schwingungskomponenten entlang der Achsen ersetzt sind durch eine Schwingungskomponente entlang der oben definierten schiefen Schwingungsebene.

Das Schwingungselement 4 kann zusätzlich eine Schwingung in X-Richtung, insbesondere simultan zu der Schwingung durch die Schwingungselemente 2' und 3', bewirken.

Die durch die Schwingungselemente 2', 3' erzeugte Schwingung weist mit Vorteil keine Schwingungskomponente in X-Richtung auf.

Verglichen mit der nicht beanspruchten Ausführungsform gemäß Figur 1 weist die Ausführungsform mit schräger Ebene den Vorteil auf, dass zwei Schwingungskomponenten, nämlich die in Y- und Z-Richtung bei dem in Figur 2 gezeigten Beispiel, mit identischer Schwingungsamplitude, Schwingungsphase und Schwingungsfrequenz vorgesehen sind, während bei der Ausführungsform gemäß Figur 1 eine exakte Steuerung beziehungsweise Regelung der Schwingungselemente 2 und 3 vorgesehen sein müsste.

Der Winkel der schrägen Ebene ist insbesondere frei wählbar, vorzugsweise zwischen 20° und 70° zur X-Richtung beziehungsweise zur X-Y-Ebene. Dies ist erfindungsgemäß insbesondere dadurch realisierbar, dass die Schwingungselemente 2' und 3' gegeneinander verschwenkbar und in einem bestimmten, einstellbaren Winkel arretierbar sind. Damit ist eine Variation der Schräglage der Ebene und folglich eine Variation der Ausrichtung der Schwingungskomponente möglich. Die Steuerung erfolgt über die Steuereinrichtung.

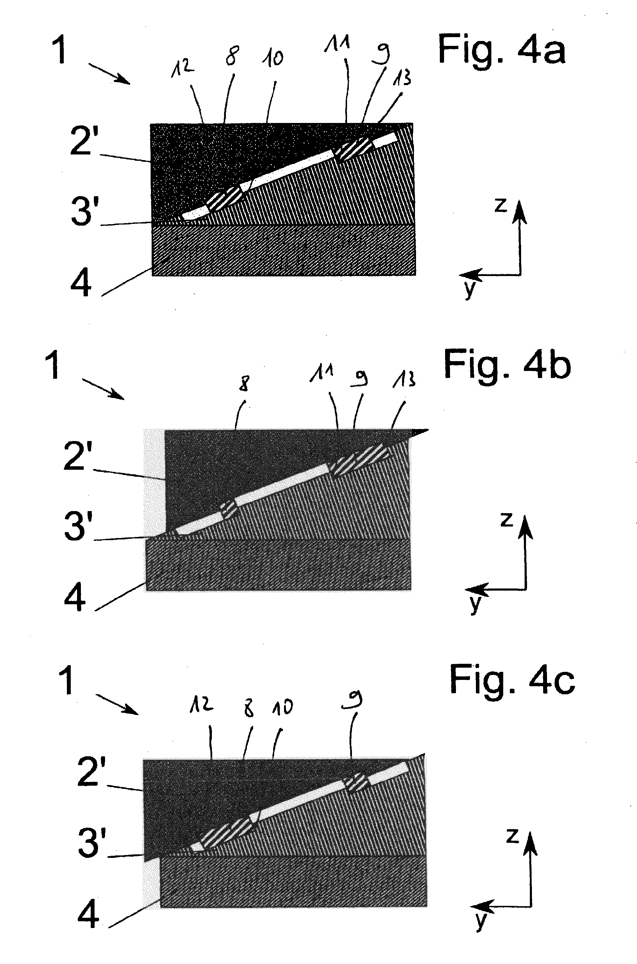

In der In Figuren 4a bis 4c gezeigten Darstellung ist die Wirkungsweise der Erzeugung von Schwingungskomponenten durch Bewegung der Schwingungselemente 2' und 3' mittels Piezoelementen 8, 9 dargestellt. In der gezeigten Ausführungsform ist das Schwingungselement 2' gegenüber dem Schwingungselement 3' gleitend geführt, und zwar entlang einer schrägen Ebene, insbesondere mit einem Winkel von 20° gegenüber der X-Y-Ebene.

In Figur 4a sind die beiden Piezoelemente 8, 9 in einer Ausgangslage, insbesondere in entspannter Stellung. Das Piezoelement 8 liegt in Richtung des Piezoelements 9 an einem Anschlag 10 des Schwingungselements 3' an. Das Piezoelement 9 liegt in Richtung des Piezoelements 8 an einem korrespondierenden Anschlag 11 des Schwingungselements 3' an.

Gemäß Figur 4b wird durch Aktivierung des Piezoelements 9 eine Ausdehnung des Piezoelements 9 bewirkt, so dass sich das Piezoelement 9 an dem Anschlag 11 sowie gegenüberliegend an einem Anschlag 13 des Schwingungselements 2' abstützt und somit das Schwingungselement 2' entlang dem Schwingungselement 3' verschiebt. Dabei wird das Piezoelement 8 zwischen dem Anschlag 10 und einem gegenüberliegend angeordneten Anschlag 12 des Schwingungselements 2' entsprechend komprimiert.

Umgekehrt gilt dies bei Aktivierung des Piezoelements 8 gemäß Figur 4c.

Als Ausführungsform der Erfindung kann vorgesehen sein, die Schwingungskomponente in Z-Richtung durch ein am Werkzeug 6 vorgesehenes Schwingungselement einzubringen. Dies kann alternativ zu dem Schwingungselement 2 oder kumulativ vorgesehen sein.

In der in Figur 3 gezeigten Ausführungsform ist ein Schwingungselement 2 analog dem Schwingungselement 2 gemäß der ersten Ausführungsform vorgesehen. Statt der Schwingungselemente 3, 4, für die Schwingungen in X- und Y-Richtung ist ein Schwingungselement 7 vorgesehen, mit dem eine Schwingungskomponente in Rotationsrichtung erzeugbar ist, wobei die Rotationsachse A insbesondere in Z-Richtung angeordnet ist. Die Rotationsachse A fällt vorzugsweise mit einer Rotationsachse des Werkzeugs 6' zusammen, das hier vorteilhafterweise ein Bohrer ist.

Die Schwingungsamplituden und/oder Schwingungsfrequenzen der Schwingungselemente 2, 2', 3, 3', 4, 7 sind durch eine Steuerungseinrichtung individuell einstellbar, um für das jeweilige Werkstück 5 die optimale Schwingungsamplitude oder Schwingungsfrequenz einzustellen.

Um das Werkstück 5 bearbeiten zu können, bedarf es zusätzlicher Motoren, die nicht dargestellt sind, und mit welchen eine Relativbewegung zwischen der Werkstückhalterung 1 und dem Werkzeug 6 bewirkt wird. Vorzugsweise arbeiten solche Motoren quasi schwingungsfrei. Die Motoren können dabei so verbaut sein, dass sie die Werkstückhalterung 1 und/oder das Werkzeug 6 antreiben.

Die vorliegende Erfindung ist daher unabhängig von der Art des Werkzeugs 6, dessen Bewegungsrichtung, Anstellwinkel, Frequenz etc. Durch die zusätzliche und anhand der Schwingungsphasen, Schwingungsfrequenzen und Schwingungsamplituden eingebrachte mehrachsige, vorzugsweise simultane, Schwingungskomponente wird eine Zertrümmerung der Mikrostrukturen, insbesondere bei ultraharten Werkstoffen, im Mikrometer-, ja sogar Nanometerbereich bewirkt. Das Werkzeug 6 ist insbesondere mit harten oder ultraharten Materialien beschichtet, insbesondere einer Diamantbeschichtung, wobei die einzelnen Diamantkristalle, die aus der Oberfläche des Werkzeugs 6 herausragen, wie mikro-/nanostrukturierte Mikro-/Nanomeißel wirken.

### Bezugszeichenliste

- 1: Werkstückhalterung
- 2, 2': Schwingungselement
- 3, 3': Schwingungselement
- 4: Schwingungselement
- 5: Werkstück
- 6: Werkzeug
- 7: Schwingungselement
- 8: Piezoelement
- 9: Piezoelement
- 10: Anschlag
- 11: Anschlag
- A: Rotationsachse
- X: X-Richtung
- Y: Y-Richtung
- Z: Z-Richtung

## Patentansprüche

1. Vorrichtung zum Bearbeiten eines Werkstücks (5) mit:
- einer Werkzeughalterung zur Aufnahme des Werkzeugs (6),
- eine Werkstückaufnahmeeinrichtung zur Aufnahme des Werkstücks (5), **dadurch gekennzeichnet, dass**
durch die Vorrichtung während des Bearbeitens mindestens eine erste Schwingungskomponente in einer Z-Richtung und eine zweite Schwingungskomponente in X- und/oder Y-Richtung durch Schwingungselemente (2, 2', 3, 3', 4, 7) einbringbar sind, **wobei die Schwingungskomponenten in X- und Y-Richtung oder in X- und Z-Richtung oder in Y- und Z-Richtung gegenüber einer Bearbeitungsrichtung oder einer Vorschubrichtung des Werkzeugs (6) und/oder des Werkstücks (5) zu einer schrägen Schwingungskomponente vereint sind.**

2. Vorrichtung nach Anspruch 1, bei der die schräge Schwingungskomponente durch ein mechanisch vorgegebenes Konstruktionselement, nämlich einer schiefen Ebene, erzeugt wird.

3. Vorrichtung nach Anspruch 2, bei der Schwingungsfrequenzen < 1 GHz, insbesondere < 100 MHz, vorzugsweise kleiner 1 MHz, noch bevorzugter < 100 kHz, noch bevorzugter < 1 kHz, idealerweise zwischen 100 Hz und 600 Hz, einstellbar sind.

4. Vorrichtung nach Anspruch 2 oder 3, bei der die Schwingungsamplituden < 100 µm, insbesondere < 10 µm, vorzugsweise kleiner 1 µm, noch bevorzugter < 100 nm, am meisten bevorzugt < 10 nm einstellbar sind.

5. Vorrichtung nach einem der vorhergehenden Ansprüche, bei der die ersten und zweiten Schwingungskomponenten simultan, insbesondere hinsichtlich deren Schwingungsphasen und/oder deren Schwingungsfrequenz und/oder deren Schwingungsamplituden, einstellbar sind.

6. Vorrichtung nach einem der vorhergehenden Ansprüche, **dadurch gekennzeichnet, dass** die Schwingungskomponenten durch Piezoelemente erzeugbar sind.

7. Vorrichtung nach einem der vorhergehenden Ansprüche, **dadurch gekennzeichnet, dass** die Einbringung der Schwingungskomponenten durch, insbesondere achsbezogene, Schwingungsdämpfung und/oder durch, insbesondere achsbezogene, Schwingungserregung erfolgt.

8. Verfahren zum Bearbeiten eines Werkstücks (5) mit:
- einer Werkzeughalterung zur Aufnahme des Werkzeugs (6),
- einer Werkstückaufnahmeeinrichtung zur Aufnahme des Werkstücks (5),
**dadurch gekennzeichnet, dass** während des Bearbeitens mindestens eine erste Schwingungskomponente in einer Z-Richtung und eine zweite Schwingungskomponente in X- und/oder Y-Richtung durch Schwingungselemente (2, 2', 3, 3', 4, 7) eingebracht werden, **wobei die Schwingungskomponenten in X- und Y-Richtung oder in X- und Z-Richtung oder in Y- und Z-Richtung gegenüber einer Bearbeitungsrichtung oder einer Vorschubrichtung des Werkzeugs (6) und/oder des Werkstücks (5) zu einer schrägen Schwingungskomponente vereint werden.**

## Claims

1. A device for the machining of a workpiece (5) with:
- a tool holding fixture for receiving the tool (6),
- a workpiece holding fixture for receiving the workpiece (5), **characterised in that**, during the machining, at least one first oscillation component in a Z-direction and a second oscillation component in the X- and/or Y-direction can be introduced by means of oscillation elements (2, 2', 3, 3', 4, 7), wherein the oscillation components are combined in X- and Y-direction or in X- and Z-direction or in Y- and Z-direction with respect to the machining direction or the feed direction of the tool (6) or the workpiece (5) to an inclined oscillation component.

2. The device according to claim 1, wherein the inclined oscillation component is caused by a mechanical construction element, namely a predetermined inclined plane.

3. The device according to claim 2, wherein oscillation frequencies < 1 GHz, in particular < 100 MHz, preferably less than 1 MHz, more preferably < 100 kHz, still more preferably < 1 kHz, ideally between 100 Hz and 600 Hz can be adjusted.

4. The device according to claim 2 or 3, wherein oscillation frequencies < 100 µm, in particular < 10 µm, preferably less than 1 µm, still more preferably < 100 nm, most preferably < 10 nm can be adjusted.

5. The device according to any one of the preceding claims, wherein the first and second oscillation components can be adjusted simultaneously, in particular with regard to their oscillation phases and/or their oscillation frequency and/or their oscillation amplitudes.

6. The device according to any one of the preceding claims, **characterised in that** the oscillation components can be generated by piezo elements.

7. The device according to any one of the preceding claims, **characterised in that** the introduction of the oscillation components takes place through, in particular axis-related, oscillation damping and/or through, in particular axis-related, oscillation excitation.

8. A method for the machining of a workpiece (5) with:
- a tool holding fixture for receiving the tool (6),
- a workpiece holding fixture for receiving the workpiece (5),
**characterised in that**, during the machining, at least one first oscillation component in a Z-direction and a second oscillation component in the X- and/or Y-direction is introduced by means of oscillation elements (2, 2', 3, 3', 4, 7),
wherein the oscillation components are combined in X- and Y-direction or in X- and Z-direction or in Y- and Z-direction with respect to the machining direction or the feed direction of the tool (6) or the workpiece (5) to an inclined oscillation component.

## Revendications

1. Dispositif destiné à l'usinage d'une pièce (5) comprenant :
- une fixation d'outil pour recevoir l'outil (6),
- un dispositif de réception de pièce pour recevoir la pièce (5), **caractérisé en ce**
**qu'**au moins une première composante d'oscillation dans un sens Z et une seconde composante oscillation dans le sens X et/ou Y peut être introduite par des éléments d'oscillation (2, 2', 3, 3', 4, 7) par le dispositif pendant l'usinage, sachant que les composantes d'oscillation dans le sens X et Y ou dans le sens X et Z ou dans le sens Y et Z sont réunies en une composante d'oscillation oblique par rapport à un sens d'usinage ou un dispositif d'avancement de l'outil (6) et/ou de la pièce (5).

2. Dispositif selon la revendication 1, dans lequel la composante d'oscillation oblique est produite par un élément de construction mécanique prédéfini, à savoir un plan penché.

3. Dispositif selon la revendication 2, dans lequel des fréquences d'oscillation peuvent être réglées < 1 GHz, en particulier < 100 MHz, de préférence inférieures à 1 MHz, plus encore de préférence < 100 kHz, plus encore de préférence < 1 kHz, idéalement entre 100 Hz et 600 Hz.

4. Dispositif selon la revendication 2 ou 3, dans lequel les amplitudes d'oscillation peuvent être réglées < 100 µm, en particulier < 10 µm, de préférence inférieures à 1 µm, plus encore de préférence < 100 nm, et de manière préférée entre toutes < 10 nm.

5. Dispositif selon l'une des revendications précédentes, dans lequel les première et seconde composantes d'oscillation peuvent être réglées simultanément, en particulier en regard de leurs phases d'oscillation et/ou de leur fréquence d'oscillation et/ou de leurs amplitudes d'oscillation.

6. Dispositif selon l'une des revendications précédentes, **caractérisé en ce que** les composantes d'oscillation peuvent être produites par des éléments piézo.

7. Dispositif selon l'une des revendications précédentes, **caractérisé en ce que** l'introduction des composantes d'oscillation, s'effectue par un amortissement d'oscillation, en particulier par rapport à l'axe, et/ou par une excitation d'oscillation en particulier par rapport à l'axe.

8. Procédé destiné à l'usinage d'une pièce (5) comprenant :
- une fixation d'outil pour recevoir l'outil (6),
- un dispositif de réception de pièce pour recevoir la pièce (5), **caractérisé en ce**
**qu'**au moins une première composante d'oscillation dans un sens z et une seconde composante oscillation dans le sens X et/ou Y peut être introduite par des éléments d'oscillation (2, 2', 3, 3', 4, 7) par le dispositif pendant l'usinage, sachant que les composantes d'oscillation dans le sens X et Y ou dans le sens X et Z ou dans le sens Y et Z sont réunies en une composante d'oscillation oblique par rapport à un sens d'usinage ou un dispositif d'avancement de l'outil (6) et/ou de la pièce (5).
